# EUROPÄISCHE PATENTANMELDUNG

(11) **EP 3 260 843 A1**
(43) Veröffentlichungstag der Anmeldung: **27.12.2017**
(21) Anmeldenummer: 16176195.2
(22) Anmeldetag: 24.06.2016
(51) Int. Cl.: G01N 17/04

(54) **ERMITTLUNG EINES EROSIONSFORTSCHRITTS**

(71) Anmelder: Siemens Aktiengesellschaft, 80333 München (DE)
(72) Erfinder: Almstedt, Henning, 45481 Mülheim an der Ruhr (DE); Bell, Ralf, 45478 Mülheim an der Ruhr (DE); Beul, Ulrich, 45219 Essen (DE); Brune, Kai, 47495 Rheinberg (DE); Burzan, Robin, 45481 Mülheim an der Ruhr (DE); Heue, Matthias, 44879 Bochum (DE); Hofmeister, Benedikt, 45479 Mülheim (DE); Koebe, Mario, 45478 Mülheim an der Ruhr (DE); Löhr, Michael, 45468 Mülheim an der Ruhr (DE); Riemann, Stefan, 41564 Kaarst (DE); Schaarschmidt, Andreas, 45133 Essen (DE); Ulma, Andreas, 45481 Mülheim an der Ruhr (DE); Zahn, Sebastian, 47051 Duisburg (DE); Zimmer, Gerta, 45468 Mülheim an der Ruhr (DE)

(57) **Zusammenfassung**

Die Erfindung betrifft eine Vorrichtung und ein Verfahren zur Ermittlung eines Erosionsfortschritts erosionsgefährdeter Bauteile in einer Strömungsmaschine, insbesondere Dampfturbine. Hierbei wird ein Probekörper (8) derart in den Strömungskanal (6) angeordnet, dass am Probekörper (8) während des Betriebs eine vergleichbare Erosion stattfindet und über eine Überwachungseinrichtung (11) und Auswerteeinrichtung der Zustand des Probekörpers (8) ermittelt wird und über diesen Zustand der Erosionsfortschritt an den erosionsgefährdeten Bauteilen der Strömungsmaschine ermittelt wird.

## Beschreibung

Die Erfindung betrifft eine Vorrichtung zur Ermittlung eines Erosionsfortschritts in einer Strömungsmaschine. Desweiteren betrifft die Erfindung ein Verfahren zum Ermitteln eines Erosionsfortschritts in einer Strömungsmaschine.

Strömungsmaschinen, wie zum Beispiel Gasturbinen, Verdichter oder insbesondere Dampfturbinen, werden mit einem Strömungsmedium durchströmt. Im Falle einer Dampfturbine umfasst das Strömungsmedium einen heißen Wasserdampf, der mit hohen Temperaturen und hohen Geschwindigkeiten durch einen Strömungskanal strömt. Innenliegende Bauteile der Dampfturbinen können durch Erosion, die durch Tropfenschlag oder durch Festkörper im Strömungsmedium verursacht werden, geschädigt werden. Diese Schädigungen können derart sein, dass sie sogar zu einem Versagen des Bauteils führen. Die Erosion ist ein Prozess, der sich über einen längeren Zeitraum erstreckt. Eine Schädigung der Bauteile ist daher nicht sofort bemerkbar, sondern möglicherweise erst zu einem späteren Zeitpunkt. Der Erosionsfortschritt ist hierbei abhängig von verschiedenen Faktoren, wie zum Beispiel Werkstoffeigenschaft, Nässe des Wasserdampfes, Partikelgehalt im Wasserdampf, Geometrien des Strömungskanals und der innenliegenden Bauteile, Betriebsverfahren wie zum Bespiel Betriebsdauer usw. abhängig. Diese Faktoren sind sehr vielfältig und verschieden. Daher ist es schwierig die Einflussfaktoren auf den Erosionsfortschritt zu bestimmen oder zu berechnen.

Es ist bekannt, die Bauteile der Strömungsmaschine durch direkte oder indirekte visuelle Möglichkeiten zu untersuchen, damit Reparaturmaßnahmen für eine bevorstehende Revision besser geplant werden können. In der Regel werden die Endstufenschaufeln einer Dampfturbine untersucht, um den Zustand einschätzen zu können.

Derzeit werden die Zustandsbewertungen auf Grundlage von vorgegebenen Prüfumfängen bei planmäßigen Revisionen durchgeführt. Hierbei werden anhand von äquivalenten Betriebsstunden standardisierte Revisionsintervalle vorgegeben.

Die Erfindung hat es sich zur Aufgabe gemacht, eine Vorrichtung und ein Verfahren anzugeben, mit der der Erosionsfortschritt eines Bauteils in einer Strömungsmaschine, insbesondere einer Dampfturbine, besser beurteilt werden kann.

Diese Aufgabe wird gelöst durch eine Vorrichtung zur Ermittlung eines Erosionsfortschritts, umfassend einen Probekörper, der in einem Strömungskanal einer Strömungsmaschine angeordnet ist, wobei der Probekörper derart angeordnet ist, dass eine Erosion am Probekörper während des Betriebs der Strömungsmaschine erfolgt, ferner umfassend eine Überwachungseinrichtung, die zur Ermittlung der Erosion des Probekörpers ausgebildet ist und diese in Form von Daten zur Verfügung stellt, ferner umfassend eine Auswerteeinrichtung, die zur Bewertung der Erosion des Probekörpers mit Hilfe der Daten aus der Überwachungseinrichtung ausgebildet ist.

Die Aufgabe wird ferner gelöst durch ein Verfahren zum Ermitteln eines Erosionsfortschritts, wobei in einer Strömungsmaschine ein Probekörper derart angeordnet wird, dass während des Betriebs eine Erosion am Probekörper stattfindet, wobei über die Erosion am Probekörper die Erosion an Bauteilen der Strömungsmaschine ermittelt wird.

Vorteilhafte Weiterbildungen sind in den Unteransprüchen angegeben, die in beliebiger Weise miteinander verknüpft werden können.

Die Erfindung geht somit den Weg, innerhalb einer Strömungsmaschine, insbesondere Dampfturbine, Probekörper aus einem bestimmten Werkstoff anzubringen. Dieser Werkstoff kann beispielsweise der Werkstoff der Turbinenschaufeln sein. Hierbei wird erfindungsgemäß der Probekörper derart angeordnet, dass während des Betriebs der Strömungsmaschine eine Erosion am Probekörper stattfindet. Idealerweise sollte der Probekörper dort angeordnet werden, wo die Bedingungen vergleichbar sind mit den Bedingungen der zu untersuchenden Bauteile, wie zum Beispiel der Turbinenschaufeln.

Hierbei wird erfindungsgemäß die Geometrie des Probekörpers mittels der Überwachungseinrichtung überwacht. In einer ersten Näherung kann die Überwachungseinrichtung derart ausgebildet sein, dass sie im einfachsten Fall ein Signal für das Vorhandensein oder Nichtvorhandensein des Probekörpers zur Verfügung stellt.

In einer ersten vorteilhaften Weiterbildung wird die Vorrichtung derart erweitert, dass der Fortschritt der Erosion ermittelbar ist. Dies erfolgt durch mehrere, sich wiederholende Untersuchungen des Probekörpers. Über die zeitliche Abhängigkeit des Zustandes des Probekörpers kann auf den Zustand der Bauteile in der Strömungsmaschine, insbesondere in der Dampfturbine, geschlossen werden.

In einer vorteilhaften Weiterbildung werden mehrere Probekörper angeordnet. Dies geschieht indem die Probekörper unterschiedliche Dicken aufweisen und dem Erosionsangriff unterschiedlich lange wiederstehen. Durch die Verwendung mehrerer Probekörper kann der Erosionsfortschritt besser beurteilt werden. Hierbei sollten die Probekörper möglichst so angeordnet werden, dass diese unter gleichen Bedingungen die Erosion erfahren. Daher sollten die Probekörper möglichst nah zueinander angeordnet sein.

In einer vorteilhaften Weiterbildung weisen die Probekörper unterschiedliche Dicken auf. Dadurch lässt sich ebenfalls die Erkennung des Erosionsfortschritts besser ermitteln.

In einer besonders vorteilhaften Weiterbildung können die unterschiedlichen Probekörper mit unterschiedlichen Materialien ausgeführt sein. Insbesondere können die Probekörper aus dem gleichen Werkstoff ausgebildet sein, wie eine in der Strömungsmaschine, insbesondere in der Dampfturbine angeordnete Lauf-oder Leitschaufel. In der Auswerteeinrichtung wird über den Zustand der Probekörper der Zustand der erosionsgefährdeten Bauteile, wie zum Beispiel die Turbinenleit- oder Laufschaufeln, ermittelt. Eine Verbesserung der Bestimmung des Zustandes der erosionsgefährdeten Bauteile wird dadurch erreicht, indem die Bedingungen und Werkstoffeigenschaften und Geometrien des Probekörpers dem gefährdeten Bauteil so weit wie möglich entsprechen, also vorzugsweise identisch oder zumindest vergleichbar sind.

In einer vorteilhaften Weiterbildung ist die Überwachungseinrichtung derart ausgebildet, dass diese die Geometrie der Probekörper ermittelt.

Die Überwachungseinrichtung weist erfindungsgemäß und vorteilhaft einen Sensor auf, der elektrisch, wie zum Beispiel magnetisch, induktiv, mittels Ultraschall usw. funktioniert.

In einer weiteren vorteilhaften Weiterbildung kann die Sensorik derart ausgebildet sein, dass sie eine visuelle Kontrolle durch zum Beispiel Endoskopie oder Lichtsensoren, wie zum Beispiel Laser, zur Verfügung stellt.

In einer vorteilhaften Weiterbildung wird der Probekörper auf einer Welle der Strömungsmaschine, insbesondere Dampfturbine angeordnet, um eine möglichst gute Vergleichbarkeit mit den erosionsgefährdeten Schaufeln zu ermöglichen.

In einer vorteilhaften Weiterbildung kann der Probekörper feststehend angeordnet werden, wie zum Beispiel auf einer Nabenverkleidung oder an einer anderen Stelle mit einem anderen Erosionsvermögen. Die Auswerteeinrichtung ist derart ausgebildet, dass diese einen Korrekturfaktor berücksichtigt, mit der der tatsächliche Erosionsfortschritt an den erosionsgefährdeten Bauteilen ermittelt wird.

Erfindungsgemäß wird somit der Erosionsfortschritt permanent beurteilt, indem der Zustand der Probekörper ausgewertet wird und an die Leittechnik gesendet wird. In der Zentrale kann der Zustand der zu überwachenden erosionsgefährdeten Bauteile, wie den Turbinenschaufeln angezeigt werden. Genügt der Erosionszustand nicht mehr den Erfordernissen könnte ein Warnsignal an das Wartungspersonal gesendet werden.

Somit ist erfindungsgemäß unabhängig von vordefinierten Inspektionsintervallen eine zustandsorientierte Bewertung des Erosionsfortschritts möglich.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen:
- Figur 1: eine schematische Darstellung eines Teils einer Strömungsmaschine mit der erfindungsgemäßen Vorrichtung,
- Figur 2: einen Teil einer Strömungsmaschine mit einer alternativen Positionierung der Vorrichtung.

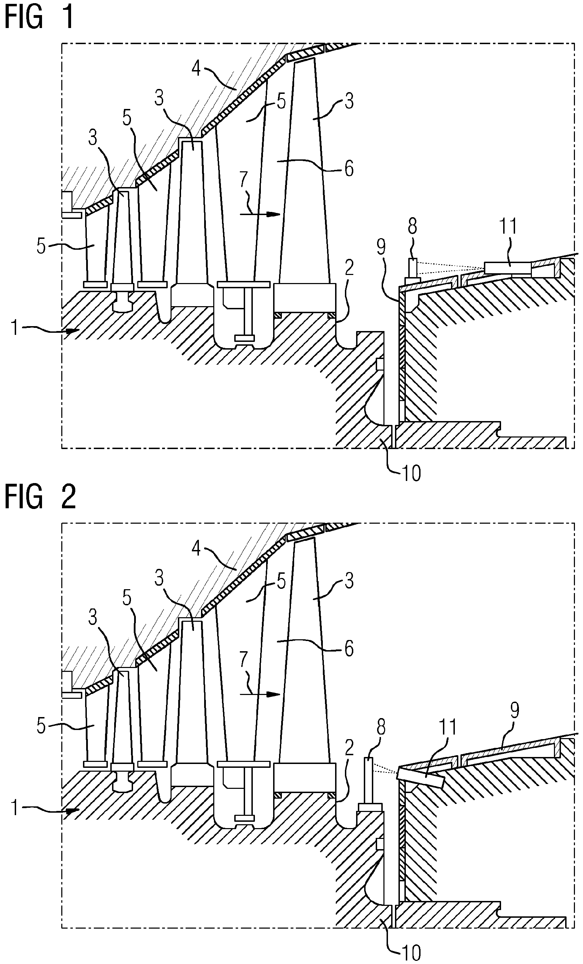

Die Figur 1 zeigt einen Teil einer Strömungsmaschine, wie zum Beispiel Gasturbine, Verdichter oder Dampfturbine. Die Strömungsmaschine umfasst einen drehbar gelagerten Rotor 1. Der Rotor 1 umfasst an seiner Außenoberfläche 2 mehrere in Richtung des Umfangs angeordnete Turbinenlaufschaufeln 3. Ferner umfasst die Strömungsmaschine ein um den Rotor 1 angeordnetes Gehäuse 4. Das Gehäuse 4 kann beispielsweise ein nicht näher dargestelltes Innengehäuse sein, wobei dann um das Innengehäuse ein Außengehäuse angeordnet ist. Am Innengehäuse 4 sind zwischen zwei Turbinenlaufschaufeln 3 Turbinenleitschaufeln 5 fest angeordnet.

Zwischen der Außenoberfläche 2 des Rotors 1 und dem Innengehäuse 4 ist ein Strömungskanal 6 ausgebildet. Durch den Strömungskanal 6 strömt im Betrieb ein Strömungsmedium. Im Falle einer Dampfturbine als Ausführungsform einer Strömungsmaschine strömt ein heißer und unter hohem Druck stehender Wasserdampf entlang einer Strömungsrichtung 7. Die thermische Energie des Wasserdampfs wird partiell in Rotationsenergie des Rotors 1 umgewandelt. Der Rotor 1 wird dadurch in einer Rotationsbewegung um eine nicht näher dargestellte Rotationsachse versetzt.

Der Dampf strömt hierbei mit einer sehr hohen Geschwindigkeit durch den Strömungskanal 7 und trifft sowohl auf die Oberfläche der Turbinenlaufschaufeln 3 als auch auf die Turbinenleitschaufeln 5. Die hohen Geschwindigkeiten und die Größe der im Dampf enthaltenen Wassertröpfchen sowie ggf. vorhandene Festkörper im Wasserdampf führen zu einem Materialabtrag auf der Turbinenlaufschaufeloberfläche sowie auf der Turbinenleitschaufeloberfläche. Um den Fortschritt der Erosion zu ermitteln, sind gemäß der Figur 1 ein oder mehrere Probekörper 8 an einem feststehenden Bauteil 9 der Strömungsmaschine angeordnet. Der Probekörper 8 ist hierbei derart angeordnet, dass dieser durch die Beströmung mit dem Strömungsmedium aus dem Strömungskanal 6 ebenfalls eine Erosion erleiden könnte. In der in Figur 1 dargestellten Ausführungsform ist der Probekörper 8 relativ nahe an der Außenoberfläche 2 des Rotors 1 angeordnet.

Die in Figur 2 dargestellte Ausführungsform der Erfindung zeigt eine Positionierung des Probekörpers 8 auf dem drehenden Bauteil, hier in diesem Fall dem Rotor 1. Gemäß Figur 2 wird der Probekörper 8 an einem stirnseitigen Ende 10 des Rotors 1 angeordnet.

Es können mehrere Probekörper 8 angeordnet werden. Die Probekörper 8 können hierbei unterschiedliche Dicken aufweisen und aus verschiedenen Materialien ausgebildet sein. Die Probekörper 8 können hierbei aus dem gleichen Werkstoff ausgebildet sein, wie ein in der Strömungsmaschine, insbesondere Dampfturbine angeordnete Turbinenlaufschaufel 3 oder Turbinenleitschaufel 5.

Die erfindungsgemäße Vorrichtung zur Ermittlung des Erosionsfortschritts der Probekörper 8 umfasst eine Überwachungseinrichtung 11, die zur Ermittlung der Erosion des Probekörpers 8 ausgebildet ist und diese in Form von Daten zur Verfügung stellt. Die Daten der Überwachungseinrichtung 11 werden zu einer nicht näher dargestellten Auswerteeinrichtung geführt. Die Auswerteeinrichtung ist derart ausgebildet, dass diese zur Bewertung der Erosion des Probekörpers 8 mit Hilfe der Daten aus der Überwachungseinrichtung 11 möglich ist.

Die Überwachungseinrichtung 11 ist hierbei derart ausgebildet, dass diese die Geometrie der Probekörper 8 ermitteln kann. Daher weist die Überwachungseinrichtung 11 einen Sensor auf, der magnetisch, induktiv oder per Ultraschall funktioniert.

In einer alternativen Ausführungsform kann die Überwachungseinrichtung 11 mit einem Sensor ausgebildet sein, der visuell, mittels Endoskopie oder durch einen Lichtsensor, wie zum Beispiel einen Laser, funktioniert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung zur Ermittlung eines Erosionsfortschritts, umfassend einen Probekörper (8),
der in einem Strömungskanal (6) einer Strömungsmaschine angeordnet ist,
wobei der Probekörper (8) derart angeordnet ist, dass eine Erosion am Probekörper (8) während des Betriebs der Strömungsmaschine erfolgt,
ferner umfassend
eine Überwachungseinrichtung (11), die zur Ermittlung der Erosion des Probekörpers (8) ausgebildet ist, und diese in Form von Daten zur Verfügung stellt,
ferner umfassend
eine Auswerteeinrichtung, die zur Bewertung der Erosion des Probekörpers (8) mit Hilfe der Daten aus der Überwachungseinrichtung (11) ausgebildet ist.

2. Vorrichtung nach Anspruch 1,
wobei der Fortschritt der Erosion ermittelbar ist.

3. Vorrichtung nach Anspruch 1 oder 2,
wobei mehrere Probekörper (8) angeordnet sind.

4. Vorrichtung nach Anspruch 3,
wobei die Probekörper (8) unterschiedliche Geometrien aufweisen.

5. Vorrichtung nach Anspruch 4,
wobei die Probekörper (8) unterschiedliche Dicken aufweisen.

6. Vorrichtung nach einem der Ansprüche 3 bis 5,
wobei die Probekörper (8) aus unterschiedlichen Materialien ausgebildet sind.

7. Vorrichtung nach einem der vorhergehenden Ansprüche,
wobei der Probekörper (8) aus dem gleichen Werkstoff ausgebildet ist, wie eine in der Strömungsmaschine angeordnete Lauf- (3) oder Leitschaufel (5).

8. Vorrichtung nach einem der vorhergehenden Ansprüche,
wobei die Überwachungseinrichtung (11) derart ausgebildet ist, dass die Geometrie des Probekörpers (8) ermittelt wird.

9. Vorrichtung nach einem der vorhergehenden Ansprüche,
wobei die Überwachungseinrichtung (11) einen Sensor aufweist, der magnetisch, induktiv oder per Ultraschall funktioniert.

10. Vorrichtung nach einem der vorhergehenden Ansprüche,
wobei die Überwachungseinrichtung (11) mit einem Sensor ausgebildet ist, der visuell, zum Beispiel per Endoskopie oder Lichtsensor, wie zum Beispiel Laser, funktioniert.

11. Vorrichtung nach einem der vorhergehenden Ansprüche,
wobei der Probekörper (8) auf einer Welle angeordnet ist.

12. Vorrichtung nach einem der vorhergehenden Ansprüche,
wobei der Probekörper (8) auf einem feststehenden Bauteil, insbesondere auf einer Nabenverkleidung angeordnet ist.

13. Verfahren zum Ermitteln eines Erosionsfortschritts,
wobei in einer Strömungsmaschine ein Probekörper (8) derart angeordnet wird, dass während des Betriebs eine Erosion am Probekörper (8) stattfindet,
wobei über die Erosion am Probekörper (8) die Erosion an Bauteilen der Strömungsmaschine ermittelt wird.

14. Verfahren nach Anspruch 13,
wobei mehrere Probekörper (8) verwendet werden.
